# EUROPEAN PATENT SPECIFICATION

(11) **EP 3 282 194 B1**
(45) Date of publication and mention of the grant of the patent: **20.02.2019**
(21) Application number: 17182520.1
(22) Date of filing: 21.07.2017
(51) Int. Cl.: F24C 3/12

(54) **A CONTROL KNOB EQUIPPED WITH A GEAR BOX FOR CONTROLLING POWER LEVEL OF A BURNER IN A GAS COOKER**
MIT ZAHNRADGETRIEBE AUSGESTATTETER STEUERKNOPF ZUR STEUERUNG DES LEISTUNGSPEGELS EINES BRENNERS IN EINER GASKOCHSTELLE
BOUTON DE COMMANDE ÉQUIPÉ D'UNE BOÎTE DE VITESSES POUR COMMANDER LE NIVEAU DE PUISSANCE D'UN BRÛLEUR DANS UNE CUISINIÈRE À GAZ

(30) Priority: 12.08.2016 TR 201611375
(43) Date of publication of application: 14.02.2018
(73) Proprietor: BSH Hausgeräte GmbH, 81739 München (DE)
(72) Inventor: Atabay, Emrah, 59500 TEKIRDAG (TR); Cigal, Serkan, 59500 TEKIRDAG (TR); Ruiloba Franco, Manuel Alejandro, 59850 TEKIRDAG (TR)

(56) References cited:
- DE-A1-102009 012 290
- JP-B2- 3 789 382
- KR-U- 20080 000 325
- US-A- 3 606 612
- US-A- 5 740 789
- US-B1- 8 869 835
- US-B2- 7 513 247

## Description

### TECHNICAL FIELD

The present invention relates to a gas cooker with control knobs and particularly to a gas cooker having a cooker body with a front panel to which a control knob is mounted, a gas tap having a flow control member controlled by a gas tap shaft which is rotated by said control knob.

### PRIOR ART

In gas cookers, each rotary control knob interacts with a gas tap inside the gas cooker. In detail, each gas tap includes a flow control member rotated by its respective gas tap shaft. Accordingly, each control knob is connected to one gas tap shaft in a shape coupling manner so that gas flow and thus the power level of the associated burner is adjusted when a user rotates the control knob.

One of the problems encountered in gas cookers is the difficulty to control the power level of the burners as the relation between the change of control knob's rotation angle and of the burner power lever is not linear. Referring to the prior art figure, there is a big angle range during which the power is decreasing a small value, followed by a small angle in which the power is decreasing considerably. This makes very difficult for a user to set intermediate power values by the control knob.

There have been various attempts to solve above mentioned drawbacks. For instance, US5906141 describes a device which permits locking of a control knob which can rotate around a cylindrical support and includes a lateral face with at least one first locking boss and a lateral face of a bracelet which has at least one second locking boss. The ring is movable in translation according to the axis between a locked position of the knob, in which the ring is prevented from rotating around the axis when the first and second bosses are engaged, and between a released position in which the first and second bosses are decoupled.

EP1388872 describes an operating mechanism for rotational switch avoiding unintentional actuation. Accordingly, a variable output device mounted on a mounting unit with the operating shaft displaceable.

TR2013/15150 describes a cooking appliance including a tactile feedback device, of which at least a portion is accommodated within a tap body of the gas tap, and which includes a follower configured to extend radially from the tap body towards a flow control element in order to provide sensory adjustment of gas adjustment levels by rotation of the button.

Further prior art is to be found in the following documents: US 3,606,612 A1, US 7,513,247 B2, US 5,740,789 A1, KR 20-2008-0000325 U, JP 3,789,382 B2 and DE 10 2009 012 290 A1. An apparatus according to the preamble of claim 1 is described in document US 8,869,835 B1.

### BRIEF DESCRIPTION OF THE INVENTION

An object of the invention is to obtain a linear relation between the rotation angle of the control knob and the power level of an associated burner.

Another object of the invention is to allow users to adjust power level of the burners more precisely.

Another object of the invention is to allow users to give a tactile feeling of burner power level when rotating a control knob.

In order to achieve above mentioned objects or those to be deducted from the specification, the present invention relates to a gas cooker having a cooker body with a front panel to which a control knob is mounted and a gas tap with a flow control member controlled by a gas tap shaft rotated by the rotation of said control knob, further comprising a primary shaft connected to the control knob, and a secondary shaft extending parallel to said primary shaft. The invention is characterized in that it comprises a gear box having said primary shaft, coupling means to connect output of the secondary shaft to the gas tap shaft, a primary gear group with plurality of gears inserted to the primary shaft in a shape coupling manner and as one adjacent to other, a secondary gear group with plurality of counter gears inserted to the secondary shaft in a shape coupling manner and as one adjacent to other and in a manner that each counter gear remains engaged with its corresponding gear in the primary gear group between predefined rotation angles of the control knob, and that the gear ratios between the gears and counter gears are so configured that the relation between the power level of the associated burner and rotation angle of the control knob becomes essentially linear at least when reducing the power of the burner from maximum power to a lower value by rotating the control knob.

In a probable embodiment of the invention, each gear and counter gear comprises teeth which partly extend along their outer periphery so that the gear and its counter gear only remain engaged along a certain rotation angle range of the control knob.

In another probable embodiment of the invention, the teeth of each gears and counter gears are aligned as outwardly eccentric with respect to the teeth of its adjacent gear and counter gear, respectively, so that the teeth and counter teeth only engage after the teeth of adjacent gear and counter gear disengage.

In another probable embodiment of the invention, at least one of the gears or counter gears comprises a ring portion through which the primary or secondary shaft passes in a shape coupling manner and an extension or extension extending radially outwardly from the external surface of the ring portion and having said teeth on its distal side.

In another probable embodiment of the invention, the gear ratios between the gears and counter gears are so configured that the relation between the power level of the associated burner and rotation angle of the control knob becomes essentially linear when reducing the power of the burner from maximum power to the minimum value.

In another probable embodiment of the invention, the gear box comprises a first gear inserted to the primary shaft and having first teeth extending partly along its periphery and a first counter gear having first counter teeth extending partly along its periphery and inserted to the secondary shaft in a manner to engage with the first teeth during a first rotation angle range of the control knob.

In another probable embodiment of the invention, the gear ratio between the first gear and the first counter gear is equal to 1. Thus, the rotation angle of the gas tap shaft is the same with that of the control knob at the beginning, i.e. opening the burner with full flame.

In another probable embodiment of the invention, the gear box further comprises a second gear inserted to the primary shaft as adjacent to the first gear and having second teeth extending partly along its periphery and a second counter gear having second counter teeth extending partly along its periphery and inserted to the secondary shaft as adjacent to the first counter gear and in a manner to engage with the second teeth during a second rotation angle range of the control knob. Related to this, the gear ratio between the second gear and the second counter gear is higher than 1.

In another probable embodiment of the invention, wherein the gear box further comprises a third gear inserted to the primary shaft as adjacent to the second gear and having third teeth extending partly along its periphery and a third counter gear having third counter teeth extending partly along its periphery and inserted to the secondary shaft as adjacent to the second counter gear and in a manner to engage with the third teeth during a third rotation angle range of the control knob. Related to this, the gear ratio between the third gear and the third counter gear is lower than 1.

In another probable embodiment of the invention, the gear box further comprises a fourth gear inserted to the primary shaft as adjacent to the third gear and having fourth teeth extending partly along its periphery and a fourth counter gear having fourth counter teeth extending partly along its periphery and inserted to the secondary shaft as adjacent to the third counter gear and in a manner to engage with the fourth teeth during a fourth rotation angle range of the control knob.

In another probable embodiment of the invention, the fourth gear ratio between the fourth gear and the fourth counter gear is lower than the third gear ratio.

In another probable embodiment of the invention, the gear box further comprises a fifth gear inserted to the primary shaft as adjacent to the fourth gear and having fifth teeth extending partly along its periphery and a fifth counter gear having fifth counter teeth extending partly along its periphery and inserted to the secondary shaft as adjacent to the fourth counter gear and in a manner to engage with the fifth teeth during a fifth rotation angle range of the control knob.

In another probable embodiment of the invention, the fifth gear ratio between the fifth gear and the fifth counter gear is lower than the fourth gear ratio.

In another probable embodiment of the invention, the gear box further comprises a sixth gear inserted to the primary shaft as adjacent to the fifth gear and having sixth teeth extending partly along its periphery and a sixth counter gear having sixth counter teeth extending partly along its periphery and inserted to the secondary shaft as adjacent to the fifth counter gear and in a manner to engage with the sixth teeth during a sixth rotation angle range of the control knob.

In another probable embodiment of the invention, the sixth gear ratio between the sixth gear and the sixth counter gear is lower than the fifth gear ratio.

In another probable embodiment of the invention, the coupling means comprises a wheel gear inserted to a distal end of the primary shaft in a freely rotating manner and coupled to the gas tap shaft via its coupling extension and a counter wheel gear inserted to the secondary shaft in a shape coupling manner and in a manner to engage with the wheel gear.

In another probable embodiment of the invention, the gear ratio between the wheel gear and the counter wheel gear is equal to 1.

In another probable embodiment of the invention, the gear box further comprises a toothed section formed on the lateral side of the first gear facing to control knob and a ring inserted to the proximal end of the primary shaft as adjacent to the first gear in a manner that a projection on its lateral side facing to the first gear engages with teeth in the toothed section during rotation of the control knob.

### BRIEF DESCRIPTION OF FIGURES

Figure 1 illustrates a gas cooker equipped with the present invention
Figure 2 illustrates exploded view of the gear box of the invention.
Figure 3 illustrates step feeling arrangement of the invention.
Figure 4 illustrates top view of the gear box of the invention.
Figure 5, 6, 7 and 8 illustrate operation principle of the invention.
Figure 9 illustrates a graphic showing the linear relation between the burner power level and control knob rotation angle.
Figure 10 illustrates non-linear relation between the burner power level and control knob rotation angle in the prior art.

### DETAILED DESCRIPTION OF THE INVENTION

Preferred embodiments of the present invention will now be more particularly described by way of non-limiting examples with reference to the accompanying drawings.

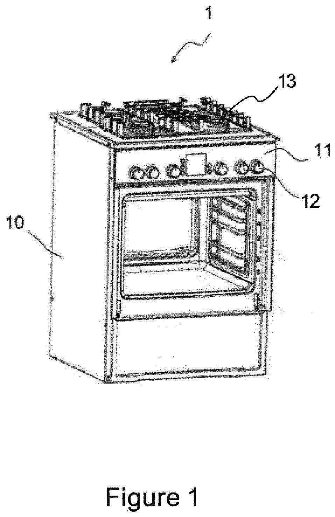

Figure 1 illustrates a gas cooker (1) having a cooker body (10) and a front panel (11) to which plurality of control knobs (12) embodying the present invention is mounted. The gas cooker (1) also comprises gas taps each having a flow control member rotated by its respective gas tap shaft (not shown in figures). Accordingly, each control knob (12) is connected to one gas tap shaft in a shape coupling manner so that gas flow is adjusted when user rotates the control knob (12). In alternative embodiments, the control knobs of the present invention, however, might be applied to any other electric or gas fired device.

There is provided a gear box (40) between the control knob (12) and gas tap (not shown in figures). Said gear box (40) mainly comprises a primary gear group with plurality of gears rotating around a primary shaft (20) which is rotated by the control knob (12) and extending along a primary axis (A). The gear box (40) also comprises a secondary gear group with plurality of counter gears rotating around a secondary shaft (30), which forms the output of the gear box (40), after engaging with their corresponding gears in the primary gear group. The secondary shaft extends along a secondary axis (B) which is parallel to said primary axis (A).

Gear ratio between each gear and counter gear in the gear box (40) is so configured that power level of the associated burner (13) changes linearly as the user rotates the control knob (12). On the other hand, teeth of each gear and its counter gear are configured so that they only engage during a certain rotation angle range of the control knob (12) once their adjacent gear and counter gear disengages. Thus, engagement duration of each gear and its counter defines one power level range adjusted by the rotation of the control knob (12).

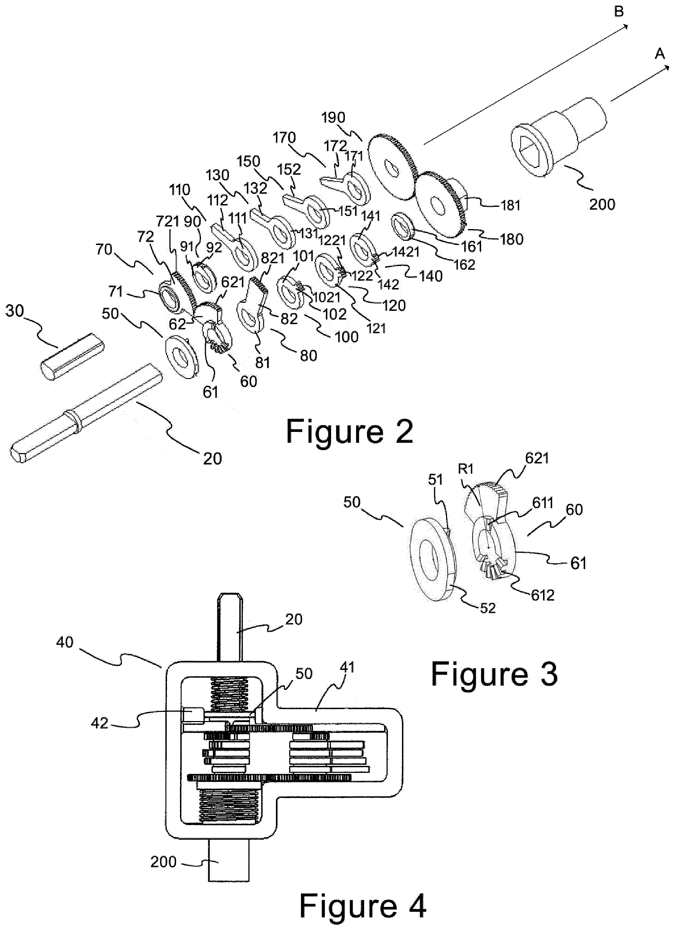

Referring to figure 2, in detail, the primary gear group comprises a first gear (60) having a first ring portion (61) and a first extension (62) extending radially outwardly from the external surface of the first ring portion (61). The primary shaft (20) passes through the first ring portion (61) in a shape coupling manner so that they rotate together. In a preferred embodiment, both the first ring portion (61) and the cross section of the primary shaft (20) are formed in C like form for enabling shape coupling. The first extension (62) is in quarter-circle form and comprises first teeth (621) on its arched side.

Correspondingly, the secondary gear group comprises a first counter gear (70) again having a first counter ring portion (71), through which the secondary shaft (30) passes in a shape coupling manner, and a first counter extension (72) in quarter-circle form with first counter teeth (721) thereon. The first counter gear (70) is almost in equivalent form with the first gear (60) and thus, no further structural details will be given to prevent unnecessary duplications. As understood, the distance between the center of a ring section and teeth of any gear or counter gear defines radius of the associated gear. For instance, in figure 3, R1 represents the radius of the first gear (60). Accordingly, since the first gear (60) and the first counter gear (70) have the same radius, the first gear ratio therebetween becomes 1. Thus, rotation amount obtained at output of the gear box (40) becomes the same as the input.

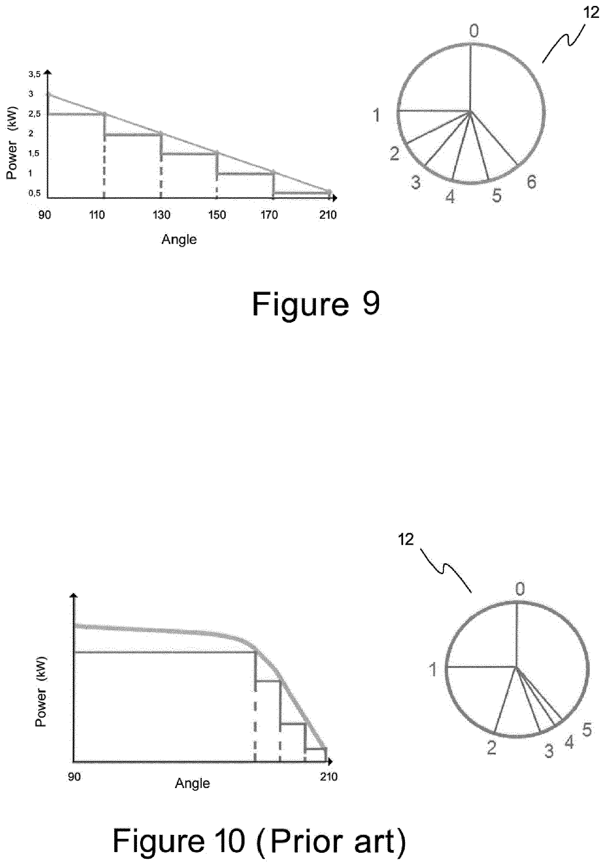

The total length of the first teeth (621) or correspondingly the first counter teeth (721) is higher than the radius of their respective ring portions (61, 71) so that the first teeth (621) and first counter teeth (721) remain engaged during a first rotation range of the control knob (12). Referring to figure 9, in a preferred embodiment, said first rotation angle range is, for instance, 90 degree. Accordingly, the user rotates the control knob (12) from position 0 where there is no flame in the associated burner to position 1 where the burner provides a flame with maximum power.

In detail, the primary gear group further comprises a second gear (80) having a second ring portion (81) and a second extension (82) extending radially outwardly from the external surface of the second ring portion (81). The second gear (80) is inserted to the primary shaft (20) as adjacent to the first gear (60) via its second ring portion (81) in a shape coupling manner. The second extension (82) comprises second teeth (821) on its distal side and is in an elongated form to adequately increase the radius of the second gear.

Correspondingly, the secondary gear group comprises a second counter gear (90) having a second counter ring portion (91) with second counter teeth (92) on the outer periphery of the ring portion so that the radius of the second counter gear (90) is kept as minimum as possible. The second counter gear (90) is inserted to the secondary shaft (30) as adjacent to the first counter gear (70) via its second counter ring portion (91) in a shape coupling manner.

As also seen from the figure 2, since the radius of the second gear (80) is considerably higher than that of the second counter gear (90), the second gear ratio between the second gear (80) and second counter gear (90) becomes higher than 1. Accordingly, rotation amount at the output of the gear box (40), i.e. of the secondary shaft (30), becomes considerably higher than the input.

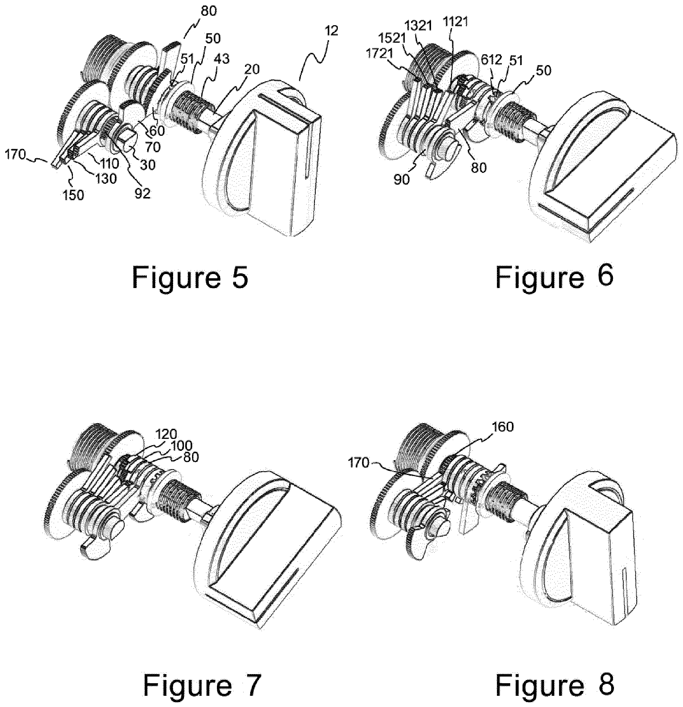

On the other hand, referring to figure 5, the second teeth (821) are aligned as outwardly eccentric with respect to the first teeth (621) and similarly the second counter (92) teeth are aligned as outwardly eccentric with respect to the first counter teeth (721) so that the second teeth and second counter teeth (821, 92) engages right after the first teeth (621) and the first counter teeth (721) disengages as illustrated in figure 6. Related to this, the total length of the second teeth (821) or correspondingly the second counter teeth (92) is lower than the radius of their respective ring portions (81, 91) so that the second teeth (821) and second counter teeth (92) only remain engaged during a second rotation range of the control knob (12). Referring to figure 9, in a preferred embodiment, said second rotation angle is, for instance, 20 degree. Accordingly, the user rotates the control knob (12) from position 1 where there is full flame to position 2 where the power level in the burner and thus flame size is a relatively reduced.

The primary gear group further comprises a third gear (100) having a third ring portion (101) and a third extension (102) extending radially outwardly from the external surface of its third ring portion (101). The third gear (100) is inserted to the primary shaft (20) as adjacent to the second gear (80) via its third ring portion (101) in a shape coupling manner. The third extension (102) comprises third teeth (1021) on its distal side and is not elongated to keep the radius of the third gear (100) relatively small.

Correspondingly, the secondary gear group further comprises a third counter gear (110) having a third counter ring portion (111) and a third counter extension (112) extending radially outwardly from the external surface of the third counter ring portion (111). The third counter gear (110) is inserted to the secondary shaft (30) as adjacent to the second counter gear (90) via its third counter ring portion (111) in a shape coupling manner. The third counter extension (112) comprises third counter teeth (1121) on its distal side and is elongated to adequately increase the radius of the third counter gear (110).

As also seen from the figure 2, since the radius of the third gear (100) is considerably lower than that of the third counter gear (110) the third gear ratio between the third gear (100) and third counter gear (110) becomes lower than 1. Accordingly, rotation amount at the output of the gear box (40) becomes considerably lower than the input.

On the other hand, referring to figure 5 and 6, the third teeth (1021) are aligned as outwardly eccentric with respect to the second teeth (821) and similarly the third counter teeth (1121) are aligned as outwardly eccentric with respect to the second counter teeth (92) so that they (1021, 1121) engage right after the second teeth (821) and the second counter teeth (92) disengages as illustrated in figure 7. Related to this, the total length of the third teeth (1021) or correspondingly the third counter teeth (1121) is lower than radius of their respective ring portions (101, 111) or even lower than the teeth lengths of the second gear (80). Accordingly, the third teeth (1021) and third counter teeth (1121) only remain engaged during a third rotation range of the control knob (12). Referring to figure 9, in a preferred embodiment, said third rotation angle is, for instance, 20 degree. In such case, the user rotates the control knob (12) from position 2 to 3 where the power level in the burner is a bit more reduced.

The primary gear group further comprises a fourth gear (120) having a fourth ring portion (121) and a fourth extension (122) extending radially outwardly from the external surface of the fourth ring portion (121). The fourth gear (120) is inserted to the primary shaft (20) as adjacent to the third gear (100) via its fourth ring portion (121) in a shape coupling manner. The fourth extension (122) comprises fourth teeth (1221) on its distal side and is not elongated to keep the radius of the fourth gear (120) relatively small.

Correspondingly, the secondary gear group further comprises a fourth counter gear (130) having a fourth counter ring portion (131) and a fourth counter extension (132) extending radially outwardly from the external surface of its fourth counter ring portion (131). The fourth counter gear (130) is inserted to the secondary shaft (30) as adjacent to the third counter gear (110) via its fourth counter ring portion (131) in a shape coupling manner. The fourth counter extension (132) comprises fourth counter teeth (1321) on its distal side and is elongated to adequately increase the radius of the fourth counter gear (130).

As also seen from the figure 2, the radius of the fourth gear (120) is so lower than that of the fourth counter gear (130) that the fourth gear ratio becomes even lower than the third gear ratio. Accordingly, rotation amount at the output of the gear box (40) is a bit more reduced compared to previous stage.

On the other hand, referring to figure 6, the fourth teeth (1221) are aligned as outwardly eccentric with respect to the third teeth (1021) and similarly the fourth counter teeth (1321) are aligned as outwardly eccentric with respect to the third counter teeth (1121) so that fourth teeth (1221) and fourth counter teeth (1321) engages right after the third teeth (1021) and the third counter teeth (1121) disengages as illustrated in figure 8. Related to this, the total length of the fourth teeth (1221) or correspondingly the fourth counter teeth (1321) is lower than radius of their respective ring portions (121, 131) or even equal to or lower than the teeth lengths of the third gear (100). Accordingly, the fourth teeth (1221) and fourth counter teeth (1321) only remain engaged during a fourth rotation range of the control knob (12). Referring to figure 9, in a preferred embodiment, said fourth rotation angle is, for instance, 20 degree. In such case, the user rotates the control knob (12) from position 3 to 4 where the power level in the burner (13) is a bit more reduced.

The primary gear group further comprises a fifth gear (140) having a fifth ring portion (141) and a fifth extension (142) extending radially outwardly from the external surface of the fifth ring portion (141). The fifth gear (140) is inserted to the primary shaft (20) as adjacent to the fourth gear (120) via its fifth ring portion (141) in a shape coupling manner. The fifth extension (142) comprises fifth teeth (1421) on its distal side and is not elongated to keep the radius of the fifth gear (140) relatively small.

Correspondingly, the secondary gear group further comprises a fifth counter gear (150) having a fifth counter ring portion (151) and a fifth counter extension (152) extending radially outwardly from the external surface of its fifth counter ring portion (151). The fifth counter gear (150) is inserted to the secondary shaft (30) as adjacent to the fourth counter gear (130) via its fifth counter ring portion (151) in a shape coupling manner. The fifth counter extension (152) comprises fifth counter teeth (1521) on its distal side and is elongated to adequately increase the radius of the fifth counter gear (150).

As also seen from the figure 2, the radius of the fifth gear (140) is so lower than that of the fifth counter gear (150) that the fifth gear ratio becomes even lower than the fourth gear ratio. Accordingly, rotation amount at the output of the gear box (40) is a bit more reduced compared to previous stage.

On the other hand, referring to figure 6, the fifth teeth (1421) are aligned as outwardly eccentric with respect to the fourth teeth (1221) and similarly the fifth counter teeth (1521) are aligned as outwardly eccentric with respect to the fourth counter teeth (1321) so that they engages (1421, 1521) right after the fourth teeth (1221) and the fourth counter teeth (1321) disengages. Related to this, the total length of the fifth teeth (1421) or correspondingly the fifth counter teeth (1521) is lower than radius of their respective ring portions (141, 151) or even equal to or lower than the teeth lengths of the fourth gear (120). Accordingly, the fifth teeth (1421) and fifth counter teeth (1521) only remain engaged during a fifth rotation range of the control knob (12). Referring to figure 9, in a preferred embodiment, said fourth rotation angle is, for instance, 20 degree. In such case, the user rotates the control knob (12) from position 4 to 5 where the power level in the burner (13) is a bit more reduced.

The primary gear group further comprises a sixth gear (160) having a sixth ring portion (161) with sixth teeth (162) on the outer periphery of its sixth ring portion (161) so that the radius of the sixth gear (160) is kept as minimum as possible. The sixth gear (160) is inserted to the primary shaft (20) as adjacent to the fifth gear (140) via its sixth ring portion (161) in a shape coupling manner.

Correspondingly, the secondary gear group further comprises a sixth counter gear (170) having a sixth counter ring portion (171) and a sixth counter extension (172) extending radially outwardly from the external surface of its sixth counter ring portion (171). The sixth counter gear (170) is inserted to the secondary shaft (30) as adjacent to the fifth counter gear (150) via its sixth counter ring portion (171) in a shape coupling manner. The sixth counter extension (172) comprises sixth counter teeth (1721) on its distal side and is elongated to adequately increase the radius of the sixth counter gear (170).

As also seen from the figure 2, the radius of the sixth gear (160) is so lower than that of the sixth counter gear (170) that the sixth gear ratio becomes even lower than the fifth gear ratio. Accordingly, rotation amount at the output of the gear box (40) is a bit more reduced compared to previous stage.

On the other hand, referring to figure 6, the sixth teeth (162) are aligned as outwardly eccentric with respect to the fifth teeth (1421) and similarly the sixth counter teeth (1721) are aligned as outwardly eccentric with respect to the fifth counter teeth (1521) so that they (162, 1721) engage right after the fifth teeth (1421) and the fifth counter teeth (1521) disengages. Related to this, the total length of the sixth teeth (162) or correspondingly the sixth counter teeth (1721) is lower than radius of their respective ring portions (161, 171) or even equal to or lower than then the teeth lengths of the fifth gear (140). Accordingly, the sixth teeth (162) and sixth counter teeth (1721) only remain engaged during a sixth rotation range of the control knob (12). Referring to figure 9, in a preferred embodiment, said sixth rotation angle is, for instance, 20 degree. In such case, the user rotates the control knob (12) from position 5 to 6 where the power level in the burner (13) is minimum.

As seen from the above explanations and associated figures, each gear and counter gear in the gear box (40) have teeth partly extending along their periphery, as different from standard wheel type gears, so that they only remain engaged along a certain rotation angle range of the control knob (12). To obtain such a gear form, preferably, gears and counter gears are obtained by removing certain portions of a wheel type gear, which is an easy to find component, by metal processing equipment. In another alternative embodiment, all the gears and counter gears can be made of a plastic material. In such case, injection molding technique may be preferred to produce plastic gears or counter gears.

It is apparent for a skilled person in the art that the number of the gear or counter gears and thus relevant parameters such as gear ratio, teeth lengths or their alignment can be changed depending on requirements defined by users or by home appliance to which the present invention is to be applied.

Referring to figure 2, the primary gear group further comprises a wheel gear (180) which is provided as adjacent to the sixth gear (160) on the primary shaft (20) and inserted to the primary shaft (20) in a freely rotating manner via its circular shaft opening. The wheel gear (180) comprises a coupling extension (181) on its circular side facing to gas tap. A tap shaft connection (200), which is coupled to the gas tap shaft, is attached the said coupling extension (181) in a shape coupling manner so that gas tap shaft rotates along with the rotation of the wheel gear (180).

Correspondingly, the secondary gear group further comprises a counter wheel gear (190) which is provided as adjacent to the sixth counter gear (170) on the secondary shaft (30) and inserted to the secondary shaft (30) in a shape coupling manner via its C shaped shaft opening. The gear ratio between the wheel gear (180) and counter wheel gear (190) is 1. Accordingly, the wheel gear (180) only rotates along with the counter wheel gear (190) so that the rotational movement in the secondary shaft (30) is transferred to the gas tap shaft.

The invention also provides step feeling to the user when rotating the control knob (12). Referring to figure 3, to achieve this tactile effect, a ring (50) is inserted to the primary shaft (20) before the first gear (60). The ring (50) has a projection (51) on its lateral surface facing to the first ring portion (61) of the first gear (60). Correspondingly, the first ring portion (61) is provided with a recess (611) and a toothed section (612) spaced apart from the recess (611) on the annular face of the first ring portion (61). The projection (51) engages with the recess (611) and then the toothed section (612) as the user rotates the control knob (12) between power adjustment levels from 0 to 6. Number of teeth in the toothed section (612) defines number of steps to be felt by the user.

Referring to figure 3 and 4, the periphery of the ring (50) also comprises a flat face (52) which abuts to a fixing wall (42) provided inside the casing (41) of the gear box (40). Thank to this, rotation of the ring (50) is prevented inside the casing (41) while the ring (50) is axially movable on the primary shaft (20). Related to this, a pressing spring (43) presses the ring (50) towards the first gear (60) in the primary axis (A) direction and the ring (50) retracts when the projection (51) coincides with teeth in said toothed section (612) or is released from said recess (611). The primary shaft (20) also comprises an abutment to which the ring (50) is rested to limit its backward movement towards the control knob (12). In a preferred embodiment, referring to figure 5, at position 0, the projection (51) is inside the recess (611) and then is released from the recess (611) as the user rotates the control knob (12) to position 1. Referring to figures 6 to 8, between positions 1 and 6 of the control knob (12), the projection (51) advances along the teeth of toothed section (612) in an axially reciprocating manner.

It will be readily apparent that modifications of the embodiments hereinbefore described are possible. In particular, although numerous features are shown in combination, these features can also be taken into consideration individually and also combined into any feasible further combinations.

### REFERENCE NUMERALS

1 Gas cooker
10 Cooker body
11 Front panel
12 Control knob
13 Burner
20 Primary shaft
30 Secondary shaft
40 Gear box
41 Casing
42 Fixing wall
43 Pressing Spring
50 Ring
51 Projection
52 Flat face
60 First gear
61 First ring portion
611 Recess
612 Toothed section
62 First extension
621 First teeth
70 First counter gear
71 First counter ring portion
72 First counter extension
721 First counter teeth
80 Second gear
81 Second ring portion
82 Second Extension
821 Second teeth
90 Second counter gear
91 Second counter ring portion
92 Second counter teeth
100 Third gear
101 Third ring portion
102 Third extension
1021 Third teeth
110 Third counter gear
111 Third counter ring portion
112 Third counter extension
1121 Third counter teeth
120 Fourth gear
121 Fourth ring portion
122 Fourth extension
1221 Fourth teeth
130 Fourth counter gear
131 Fourth counter ring portion
132 Fourth counter extension
1321 Fourth counter teeth
140 Fifth gear
141 Fifth ring portion
142 Fifth extension
1421 Fifth teeth
150 Fifth counter gear
151 Fifth counter ring portion
152 Fifth counter extension
1521 Fifth counter teeth
160 Sixth gear
161 Sixth ring portion
162 Sixth teeth
170 Sixth counter gear
171 Sixth counter ring portion
172 Sixth counter extension
1721 Sixth counter teeth
180 Wheel gear
181 Coupling extension
190 Counter wheel gear
200 Tap shaft connection
A: Primary axis
B: Secondary axis
R1 : Radius of the first gear

## Claims

1. A gas cooker (1) having a cooker body (10) with a front panel (11) to which a control knob (12) is mounted and a gas tap with a flow control member controlled by a gas tap shaft rotated by the rotation of said control knob (12), further comprising a primary shaft (20) connected to the control knob (12), a secondary shaft (30) extending parallel to said primary shaft (20), **characterized in that** it comprises a gear box (40) having said primary shaft (20), coupling means to connect output of the secondary shaft (30) to the gas tap shaft, a primary gear group with plurality of gears inserted to the primary shaft (20) in a shape coupling manner and as one adjacent to other, a secondary gear group with plurality of counter gears inserted to the secondary shaft (30) in a shape coupling manner and as one adjacent to other and in a manner that each counter gear remains engaged with its corresponding gear in the primary gear group between predefined rotation angles of the control knob (12), ***and that*** the gear ratios between the gears and counter gears are so configured that the relation between the power level of the associated burner and rotation angle of the control knob (12) becomes essentially linear at least when reducing the power of the burner from maximum power to a lower value by rotating the control knob (12).

2. A gas cooker (1) according to claim 1, wherein each gear and counter gear comprises teeth which partly extend along their outer periphery so that the gear and its counter gear only remain engaged along a certain rotation angle range of the control knob.

3. A gas cooker (1) according to claim 1 or 2, wherein the teeth of each gears and counter gears are aligned as outwardly eccentric with respect to the teeth of its adjacent gear and counter gear, respectively, so that the teeth and counter teeth only engage after the teeth of adjacent gear and counter gear disengage.

4. A gas cooker (1) according to any of the preceding claims, wherein at least one of the gears or counter gears comprises a ring portion through which the primary or secondary shaft (20, 30) passes in a shape coupling manner and an extension or extension extending radially outwardly from the external surface of the ring portion and having said teeth on its distal side.

5. A gas cooker (1) according to any of the preceding claims, wherein the gear ratios between the gears and counter gears are so configured that the relation between the power level of the associated burner and rotation angle of the control knob (12) becomes essentially linear when reducing the power of the burner from maximum power to minimum value.

6. A gas cooker (1) according to claim 1, wherein the gear box (40) comprises a first gear (60) inserted to the primary shaft (20) and having first teeth (621) extending partly along its periphery and a first counter gear (70) having first counter teeth (721) extending partly along its periphery and inserted to the secondary shaft (30) in a manner to engage with the first teeth (621) during a first rotation angle range of the control knob (12).

7. A gas cooker (1) according to claim 6, wherein the gear ratio between the first gear (60) and the first counter gear (70) is equal to 1.

8. A gas cooker (1) according to claim 6, wherein the gear box (40) further comprises a second gear (80) inserted to the primary shaft (20) as adjacent to the first gear (60) and having second teeth (821) extending partly along its periphery and a second counter gear (90) having second counter teeth (92) extending partly along its periphery and inserted to the secondary shaft (30) as adjacent to the first counter gear (70) and in a manner to engage with the second teeth (821) during a second rotation angle range of the control knob (12).

9. A gas cooker (1) according to claim 8, wherein the gear ratio between the second gear (80) and the second counter gear (90) is higher than 1.

10. A gas cooker (1) according to claim 8, wherein the gear box (40) further comprises a third gear (100) inserted to the primary shaft (20) as adjacent to the second gear (80) and having third teeth (1021) extending partly along its periphery and a third counter gear (110) having third counter teeth (1121) extending partly along its periphery and inserted to the secondary shaft (30) as adjacent to the second counter gear (90) and in a manner to engage with the third teeth (1021) during a third rotation angle range of the control knob (12).

11. A gas cooker (1) according to claim 10, wherein the gear ratio between the third gear (100) and the third counter gear (110) is lower than 1.

12. A gas cooker (1) according to claim 10, wherein the gear box (40) further comprises a fourth gear (120) inserted to the primary shaft (20) as adjacent to the third gear (100) and having fourth teeth (1221) extending partly along its periphery and a fourth counter gear (130) having fourth counter teeth (1321) extending partly along its periphery and inserted to the secondary shaft (30) as adjacent to the third counter gear (110) and in a manner to engage with the fourth teeth (120) during a fourth rotation angle range of the control knob (12).

13. A gas cooker (1) according to claim 12, wherein the fourth gear ratio between the fourth gear (120) and the fourth counter gear (130) is lower than the third gear ratio.

14. A gas cooker (1) according to claim 12, wherein the gear box (40) further comprises a fifth gear (140) inserted to the primary shaft (20) as adjacent to the fourth gear (120) and having fifth teeth (1421) extending partly along its periphery and a fifth counter gear (150) having fifth counter teeth (1521) extending partly along its periphery and inserted to the secondary shaft (30) as adjacent to the fourth counter gear (130) and in a manner to engage with the fifth teeth (1421) during a fifth rotation angle range of the control knob (12).

15. A gas cooker (1) according to claim 14, wherein the fifth gear ratio between the fifth gear (140) and the fifth counter gear (150) is lower than the fourth gear ratio.

16. A gas cooker (1) according to claim 14, wherein the gear box (40) further comprises a sixth gear (160) inserted to the primary shaft (20) as adjacent to the fifth gear (140) and having sixth teeth (162) extending partly along its periphery and a sixth counter gear (170) having sixth counter teeth (1721) extending partly along its periphery and inserted to the secondary shaft (30) as adjacent to the fifth counter gear (150) and in a manner to engage with the sixth teeth (162) during a sixth rotation angle range of the control knob (12).

17. A gas cooker (1) according to claim 16, wherein the sixth gear ratio between the sixth gear (160) and the sixth counter gear (170) is lower than the fifth gear ratio.

18. A gas cooker (1) according to claim 1, wherein the coupling means comprises a wheel gear (180) inserted to a distal end of the primary shaft (20) in a freely rotating manner and coupled to the gas tap shaft via its coupling extension (181) and a counter wheel gear (190) inserted to the secondary shaft (30) in a shape coupling manner and in a manner to engage with the wheel gear (180).

19. A gas cooker (1) according to claim 18, wherein the gear ratio between the wheel gear (180) and the counter wheel gear (190) is equal to 1.

20. A gas cooker (1) according to claim 1, wherein the gear box (40) further comprises a toothed section (612) formed on the lateral side of the first gear (60) facing to control knob (12) and a ring (50) inserted to the proximal end of the primary shaft (20) as adjacent to the first gear (60) in a manner that a projection (51) on its lateral side facing to the first gear (60) engages with teeth in the toothed section (612) during rotation of the control knob (12).

## Patentansprüche

1. Gasherd (1) mit einem Herdhauptteil (10) mit einer Frontblende (11), an der ein Drehknopf (12) angebracht ist, und einem Gashahn mit einem Durchflussregelelement, das über eine Gashahnwelle betätigt wird, die durch Drehen des Drehknopfs (12) gedreht wird, wobei der Gasherd ferner Folgendes umfasst:
eine primäre Welle (20), die mit dem Drehknopf (12) verbunden ist, eine sekundäre Welle (30), die parallel zu der primären Welle (20) verläuft,
**dadurch gekennzeichnet, dass** er ein Getriebe (40) mit der primären Welle (20), ein Kopplungsmittel zum Verbinden der Abtriebsseite der sekundären Welle (30) mit der Gashahnwelle, eine primäre Zahnradgruppe mit mehreren in formschlüssiger Weise auf die primäre Welle (20) gesteckten und nebeneinanderliegenden Zahnrädern, eine sekundäre Zahnradgruppe mit mehreren in formschlüssiger Weise auf die sekundäre Welle (30) gesteckten und nebeneinanderliegenden und so angeordneten Zahnrädern,
dass jedes Gegenzahnrad zwischen vorgegebenen Drehwinkeln des Drehknopfs (12) weiterhin mit seinem entsprechenden Zahnrad in der primären Zahnradgruppe in Eingriff bleibt **und dass** die Übersetzungsverhältnisse zwischen den Zahnrädern und
den Gegenzahnrädern so konfiguriert sind, dass die Beziehung zwischen dem Leistungspegel des zugehörigen Brenners und dem Drehwinkel des Drehknopfs (12) zumindest beim Verringern der Leistung des Brenners von der Maximalleistung auf einen geringeren Wert durch Drehen des Drehknopfs (12) im Wesentlichen linear wird.

2. Gasherd (1) nach Anspruch 1, wobei jedes Zahnrad und Gegenzahnrad Zähne umfasst, die teilweise an seinem Außenumfang entlang verlaufen, so dass das Zahnrad und sein Gegenzahnrad nur in einem bestimmten Drehwinkelbereich des Drehknopfs in Eingriff miteinander bleiben.

3. Gasherd (1) nach Anspruch 1 oder 2, wobei die Zähne aller Zahnräder und Gegenzahnräder in Bezug auf die Zähne ihres benachbarten Zahnrads beziehungsweise Gegenzahnrads außen exzentrisch ausgerichtet sind, so dass die Zähne und Gegenzähne nur in Eingriff kommen, wenn die Zähne des benachbarten Zahnrads und Gegenzahnrads ausrücken.

4. Gasherd (1) nach einem der vorhergehenden Ansprüche, wobei mindestens eines der Zahnräder oder Gegenzahnräder einen Ringabschnitt, durch den auf formschlüssige Weise die primäre oder die sekundäre Welle (20, 30) verläuft, und eine Verlängerung oder eine von der Außenfläche des Ringabschnitts radial nach außen verlaufende Verlängerung mit den Zähnen auf ihrer distalen Seite umfasst.

5. Gasherd (1) nach einem der vorhergehenden Ansprüche, wobei die Übersetzungsverhältnisse zwischen den Zahnrädern und den Gegenzahnrädern so konfiguriert sind, dass die Beziehung zwischen dem Leistungspegel des zugehörigen Brenners und dem Drehwinkel des Drehknopfs (12) beim Verringern der Leistung des Brenners von der Maximalleistung auf einen Mindestwert im Wesentlichen linear wird.

6. Gasherd (1) nach Anspruch 1, wobei das Getriebe (40) ein erstes Zahnrad (60), das auf die primäre Welle (20) gesteckt ist und erste Zähne (621) aufweist, die teilweise an seinem Umfang entlang verlaufen, und ein erstes Gegenzahnrad (70) umfasst, das erste Gegenzähne (721) aufweist, die teilweise an seinem Umfang entlang verlaufen, und so auf die zweite Welle (30) gesteckt ist, dass sie in einem ersten Drehwinkelbereich des Drehknopfs (12) in die ersten Zähne (621) eingreifen.

7. Gasherd (1) nach Anspruch 6, wobei das Übersetzungsverhältnis zwischen dem ersten Zahnrad (60) und dem ersten Gegenzahnrad (70) 1 entspricht.

8. Gasherd (1) nach Anspruch 6, wobei das Getriebe (40) ferner ein zweites Zahnrad (80), das neben dem ersten Zahnrad (60) auf die primäre Welle (20) gesteckt ist und zweite Zähne (821) aufweist, die teilweise an seinem Umfang entlang verlaufen, und ein zweites Gegenzahnrad (90) umfasst, das zweite Gegenzähne (92) aufweist, die teilweise an seinem Umfang entlang verlaufen, und neben dem ersten Gegenzahnrad (70) so auf die zweite Welle (30) gesteckt ist, dass sie in einem zweiten Drehwinkelbereich des Drehknopfs (12) in die zweiten Zähne (821) eingreifen.

9. Gasherd (1) nach Anspruch 8, wobei das Übersetzungsverhältnis zwischen dem zweiten Zahnrad (80) und dem zweiten Gegenzahnrad (90) mehr als 1 beträgt.

10. Gasherd (1) nach Anspruch 8, wobei das Getriebe (40) ferner ein drittes Zahnrad (100), das neben dem zweiten Zahnrad (80) auf die primäre Welle (20) gesteckt ist und dritte Zähne (1021) aufweist, die teilweise an seinem Umfang entlang verlaufen, und ein drittes Gegenzahnrad (110) umfasst, das dritte Gegenzähne (1121) aufweist, die teilweise an seinem Umfang entlang verlaufen, und neben dem zweiten Gegenzahnrad (90) so auf die zweite Welle (30) gesteckt ist, dass sie in einem dritten Drehwinkelbereich des Drehknopfs (12) in die dritten Zähne (1021) eingreifen.

11. Gasherd (1) nach Anspruch 10, wobei das Übersetzungsverhältnis zwischen dem dritten Zahnrad (100) und dem dritten Gegenzahnrad (110) weniger als 1 beträgt.

12. Gasherd (1) nach Anspruch 10, wobei das Getriebe (40) ferner ein viertes Zahnrad (120), das neben dem dritten Zahnrad (100) auf die primäre Welle (20) gesteckt ist und vierte Zähne (1221) aufweist, die teilweise an seinem Umfang entlang verlaufen, und ein viertes Gegenzahnrad (130) umfasst, das vierte Gegenzähne (1321) aufweist, die teilweise an seinem Umfang entlang verlaufen, und neben dem dritten Gegenzahnrad (110) so auf die zweite Welle (30) gesteckt ist, dass sie in einem vierten Drehwinkelbereich des Drehknopfs (12) in die vierten Zähne (120) eingreifen.

13. Gasherd (1) nach Anspruch 12, wobei das vierte Übersetzungsverhältnis zwischen dem vierten Zahnrad (120) und dem vierten Gegenzahnrad (130) unter dem dritten Übersetzungsverhältnis liegt.

14. Gasherd (1) nach Anspruch 12, wobei das Getriebe (40) ferner ein fünftes Zahnrad (140), das neben dem vierten Zahnrad (120) auf die primäre Welle (20) gesteckt ist und fünfte Zähne (1421) aufweist, die teilweise an seinem Umfang entlang verlaufen, und ein fünftes Gegenzahnrad (150) umfasst, das fünfte Gegenzähne (1521) aufweist, die teilweise an seinem Umfang entlang verlaufen, und neben dem vierten Gegenzahnrad (130) so auf die zweite Welle (30) gesteckt ist, dass sie in einem fünften Drehwinkelbereich des Drehknopfs (12) in die fünften Zähne (1421) eingreifen.

15. Gasherd (1) nach Anspruch 14, wobei das fünfte Übersetzungsverhältnis zwischen dem fünften Zahnrad (140) und dem fünften Gegenzahnrad (150) unter dem vierten Übersetzungsverhältnis liegt.

16. Gasherd (1) nach Anspruch 14, wobei das Getriebe (40) ferner ein sechstes Zahnrad (160), das neben dem fünften Zahnrad (140) auf die primäre Welle (20) gesteckt ist und sechste Zähne (162) aufweist, die teilweise an seinem Umfang entlang verlaufen, und ein sechstes Gegenzahnrad (170) umfasst, das sechste Gegenzähne (1721) aufweist, die teilweise an seinem Umfang entlang verlaufen und neben dem fünften Gegenzahnrad (150) so auf die zweite Welle (30) gesteckt sind, dass sie in einem sechsten Drehwinkelbereich des Drehknopfs (12) in die sechsten Zähne (162) eingreifen.

17. Gasherd (1) nach Anspruch 16, wobei das sechste Übersetzungsverhältnis zwischen dem sechsten Zahnrad (160) und dem sechsten Gegenzahnrad (170) unter dem fünften Übersetzungsverhältnis liegt.

18. Gasherd (1) nach Anspruch 1, wobei das Kopplungsmittel ein Stirnrad (180), das frei drehbar auf ein distales Ende der primären Welle (20) gesteckt und über seine Kopplungsverlängerung (181) mit der Gashahnwelle gekoppelt ist, und ein Gegenstirnrad (190) umfasst, das in formschlüssiger Weise so auf die sekundäre Welle (30) gesteckt ist, dass es in das Stirnrad (180) eingreift.

19. Gasherd (1) nach Anspruch 18, wobei das Übersetzungsverhältnis zwischen dem Stirnrad (180) und dem Gegenstirnrad (190) 1 entspricht.

20. Gasherd (1) nach Anspruch 1, wobei das Getriebe (40) ferner einen gezahnten Teil (612), der an der dem Drehknopf (12) zugewandten Seite des ersten Zahnrads (60) ausgebildet ist, und einen Ring (50) umfasst, der neben dem ersten Zahnrad (60) so auf das proximale Ende der primären Welle (20) gesteckt ist, dass ein Vorsprung (51) auf seiner dem ersten Zahnrad (60) zugewandten Seite beim Drehen des Drehknopfs (12) in Zähne an dem gezahnten Teil (612) eingreift.

## Revendications

1. Cuisinière à gaz (1) comportant un corps de cuisinière (10) pourvu d'un panneau avant (11) sur lequel est monté un bouton de commande (12) et d'un robinet de gaz doté d'un organe de réglage de débit commandé par une tige de robinet de gaz tournée par la rotation dudit bouton de commande (12), comprenant en outre un arbre primaire (20) relié au bouton de commande (12), un arbre secondaire (30) s'étendant parallèlement audit arbre primaire (20),
**caractérisée en ce qu'**elle comprend une boîte de vitesse (40) comportant ledit arbre primaire (20), un moyen d'accouplement pour relier la sortie de l'arbre secondaire (30) à la tige de robinet de gaz, un groupe de roues dentées primaires avec une pluralité de roues dentées insérées sur l'arbre primaire (20) par complémentarité de forme et les unes à côté des autres, un groupe de roues dentées secondaires avec une pluralité de roues dentées conjuguées insérées sur l'arbre secondaire (30) par complémentarité de forme et les unes à côté des autres et de manière que chaque roue dentée conjuguée reste en prise avec sa roue dentée correspondante du groupe de roues dentées primaires entre des angles de rotation prédéfinis du bouton de commande (12), et **en ce que** les rapports d'engrenage entre les roues dentées et les roues dentées conjuguées sont conçus de telle sorte que la relation entre le niveau de puissance du brûleur associé et l'angle de rotation du bouton de commande (12) devient essentiellement linéaire, au moins lors de la réduction de la puissance du brûleur, d'une puissance maximale à une valeur inférieure par rotation du bouton de commande (12).

2. Cuisinière à gaz (1) selon la revendication 1, dans laquelle chacune des roues dentées et des roues dentées conjuguées comprend des dents qui s'étendent en partie le long de sa périphérie extérieure, de manière que la roue dentée et sa roue dentée conjuguée ne restent en prise que le long d'une certaine plage angulaire de rotation du bouton de commande.

3. Cuisinière à gaz (1) selon la revendication 1 ou 2, dans laquelle les dents de chacune des roues dentées et des roues dentées conjuguées sont alignées de façon à être excentrées vers l'extérieur par rapport aux dents de la roue dentée et de la roue dentée conjuguée adjacentes, respectivement, de manière que les dents et les dents conjuguées n'entrent en prise qu'après que les dents de la roue dentée et de la roue dentée conjuguée adjacentes se sont désolidarisées.

4. Cuisinière à gaz (1) selon l'une quelconque des revendications précédentes, dans laquelle au moins l'une des roues dentées ou des roues dentées conjuguées comprend une partie bague à travers laquelle passe l'arbre primaire ou secondaire (20, 30) par complémentarité de forme et un prolongement ou prolongement conjugué s'étendant radialement vers l'extérieur à partir de la surface externe de la partie bague et sur le côté distal duquel se trouvent lesdites dents.

5. Cuisinière à gaz (1) selon l'une quelconque des revendications précédentes, dans laquelle les rapports d'engrenage entre les roues dentées et les roues dentées conjuguées sont conçus de telle sorte que la relation entre le niveau de puissance du brûleur associé et l'angle de rotation du bouton de commande (12) devient essentiellement linéaire, lors de la réduction de la puissance du brûleur, d'une puissance maximale à une valeur minimale.

6. Cuisinière à gaz (1) selon la revendication 1, dans laquelle la boîte de vitesse (40) comprend une première roue dentée (60) insérée sur l'arbre primaire (20) et comportant des premières dents (621) s'étendant en partie le long de sa périphérie, et une première roue dentée conjuguée (70) comportant des premières dents conjuguées (721) s'étendant en partie le long de sa périphérie et insérée sur l'arbre secondaire (30) de manière à entrer en prise avec les premières dents (621) au cours d'une première plage angulaire de rotation du bouton de commande (12).

7. Cuisinière à gaz (1) selon la revendication 6, dans laquelle le rapport d'engrenage entre la première roue dentée (60) et la première roue dentée conjuguée (70) est égal à 1.

8. Cuisinière à gaz (1) selon la revendication 6, dans laquelle la boîte de vitesse (40) comprend en outre une deuxième roue dentée (80) insérée sur l'arbre primaire (20), à côté de la première roue dentée (60) et comportant des deuxièmes dents (821) s'étendant en partie le long de sa périphérie, et une deuxième roue dentée conjuguée (90) comportant des deuxièmes dents conjuguées (92) s'étendant en partie le long de sa périphérie et insérée sur l'arbre secondaire (30), à côté de la première roue dentée conjuguée (70) et de manière à entrer en prise avec les deuxièmes dents (821) au cours d'une deuxième plage angulaire de rotation du bouton de commande (12).

9. Cuisinière à gaz (1) selon la revendication 8, dans laquelle le rapport d'engrenage entre la deuxième roue dentée (80) et la deuxième roue dentée conjuguée (90) est supérieur à 1.

10. Cuisinière à gaz (1) selon la revendication 8, dans laquelle la boîte de vitesse (40) comprend en outre une troisième roue dentée (100) insérée sur l'arbre primaire (20), à côté de la deuxième roue dentée (80) et comportant des troisièmes dents (1021) s'étendant en partie le long de sa périphérie, et une troisième roue dentée conjuguée (110) comportant des troisièmes dents conjuguées (1121) s'étendant en partie le long de sa périphérie et insérée sur l'arbre secondaire (30), à côté de la deuxième roue dentée conjuguée (90) et de manière à entrer en prise avec les troisièmes dents (1021) au cours d'une troisième plage angulaire de rotation du bouton de commande (12).

11. Cuisinière à gaz (1) selon la revendication 10, dans laquelle le rapport d'engrenage entre la troisième roue dentée (100) et la troisième roue dentée conjuguée (110) est inférieur à 1.

12. Cuisinière à gaz (1) selon la revendication 10, dans laquelle la boîte de vitesse (40) comprend en outre une quatrième roue dentée (120) insérée sur l'arbre primaire (20), à côté de la troisième roue dentée (100) et comportant des quatrièmes dents (1221) s'étendant en partie le long de sa périphérie, et une quatrième roue dentée conjuguée (130) comportant des quatrièmes dents conjuguées (1321) s'étendant en partie le long de sa périphérie et insérée sur l'arbre secondaire (30), à côté de la troisième roue dentée conjuguée (110) et de manière à entrer en prise avec les quatrièmes dents (120) au cours d'une quatrième plage angulaire de rotation du bouton de commande (12).

13. Cuisinière à gaz (1) selon la revendication 12, dans laquelle le quatrième rapport d'engrenage entre la quatrième roue dentée (120) et la quatrième roue dentée conjuguée (130) est inférieur au troisième rapport d'engrenage.

14. Cuisinière à gaz (1) selon la revendication 12, dans laquelle la boîte de vitesse (40) comprend en outre une cinquième roue dentée (140) insérée sur l'arbre primaire (20), à côté de la quatrième roue dentée (120) et comportant des cinquièmes dents (1421) s'étendant en partie le long de sa périphérie, et une cinquième roue dentée conjuguée (150) comportant des cinquièmes dents conjuguées (1521) s'étendant en partie le long de sa périphérie et insérée sur l'arbre secondaire (30), à côté de la quatrième roue dentée conjuguée (130) et de manière à entrer en prise avec les cinquièmes dents (1421) au cours d'une cinquième plage angulaire de rotation du bouton de commande (12).

15. Cuisinière à gaz (1) selon la revendication 14, dans laquelle le cinquième rapport d'engrenage entre la cinquième roue dentée (140) et la cinquième roue dentée conjuguée (150) est inférieur au quatrième rapport d'engrenage.

16. Cuisinière à gaz (1) selon la revendication 14, dans laquelle la boîte de vitesse (40) comprend en outre une sixième roue dentée (160) insérée sur l'arbre primaire (20), à côté de la cinquième roue dentée (140) et comportant des sixièmes dents (162) s'étendant en partie le long de sa périphérie, et une sixième roue dentée conjuguée (170) comportant des sixièmes dents conjuguées (1721) s'étendant en partie le long de sa périphérie et insérée sur l'arbre secondaire (30), à côté de la cinquième roue dentée conjuguée (150) et de manière à entrer en prise avec les sixièmes dents (162) au cours d'une sixième plage angulaire de rotation du bouton de commande (12).

17. Cuisinière à gaz (1) selon la revendication 16, dans laquelle le sixième rapport d'engrenage entre la sixième roue dentée (160) et la sixième roue dentée conjuguée (170) est inférieur au cinquième rapport d'engrenage.

18. Cuisinière à gaz (1) selon la revendication 1, dans laquelle le moyen d'accouplement comprend une roue d'engrenage (180) insérée sur une extrémité distale de l'arbre primaire (20) de manière à pouvoir tourner librement et accouplée à la tige de robinet de gaz par le biais de son prolongement d'accouplement (181), et une roue d'engrenage conjuguée (190) insérée sur l'arbre secondaire (30) par complémentarité de forme et de manière à entrer en prise avec la roue d'engrenage (180).

19. Cuisinière à gaz (1) selon la revendication 18, dans laquelle le rapport d'engrenage entre la roue d'engrenage (180) et la roue d'engrenage conjuguée (190) est égal à 1.

20. Cuisinière à gaz (1) selon la revendication 1, dans laquelle la boîte de vitesse (40) comprend en outre une section dentée (612) formée sur le côté latéral de la première roue dentée (60) en regard du bouton de commande (12) et une bague (50) insérée sur l'extrémité proximale de l'arbre primaire (20) à côté de la première roue dentée (60) de manière qu'une saillie (51) sur son côté latéral en regard de la première roue dentée (60) entre en prise avec des dents de la section dentée (612) au cours de la rotation du bouton de commande (12).
